# EUROPÄISCHE PATENTSCHRIFT

(11) **EP 1 016 256 B1**
(45) Veröffentlichungstag und Bekanntmachung des Hinweises auf die Patenterteilung: **24.04.2002**
(21) Anmeldenummer: 98955331.8
(22) Anmeldetag: 15.09.1998
(51) Int. Cl.: H04M 1/72

(54) **VERFAHREN ZUM ANMELDEN EINES MOBILTEILS AN EINER BASISSTATION UND KOMMUNIKATIONSSYSTEM**
PROCEDURE FOR A MOBILE UNIT TO LOG IN WITH A BASE STATION, AND COMMUNICATION SYSTEM
PROCEDURE D'ENTREE EN COMMUNICATION D'UNE UNITE MOBILE AVEC UNE STATION DE BASE, ET SYSTEME DE COMMUNICATION

(30) Priorität: 17.09.1997 DE 19740934
(43) Veröffentlichungstag der Anmeldung: 05.07.2000
(73) Patentinhaber: SIEMENS AKTIENGESELLSCHAFT, 80333 München (DE)
(72) Erfinder: FERNANDEZ, Gustavo, D-46399 Bocholt (DE); HOLZTRATNER, Alex, CEP-81050-120 Curitiba, PR (BR); HÜLDER, Stefan, D-44795 Bochum (DE); SIEMENS, Gerhard, D-46325 Borken (DE); STAHL, Jürgen, D-46397 Bocholt (DE)
(86) Internationale Anmeldenummer: DE9802732
(87) Internationale Veröffentlichungsnummer: WO9914956

(56) Entgegenhaltungen:
- US-A- 4 736 404
- US-A- 4 979 205
- US-A- 5 500 888

## Beschreibung

Die Erfindung betrifft ein Verfahren zum Anmelden eines Mobilteils an einer Basisstation sowie ein Kommunikationssystem. Die Erfindung ist insbesondere für Telefonsysteme mit mindestens einem Mobilteil und mindestens einer Basisstation einsetzbar. Das Mobilteil kann dabei ein schnurloses Telefon, insbesondere ein analoges Telefon nach dem CT0-Standard sein. Die Erfindung ist jedoch auch in anderen Kommunikationssystemen einsetzbar, bei denen eine sichere Zuordnung zwischen Mobilteilen und Basisstationen erforderlich ist, beispielsweise für Fernsteuerungen aller Art.

Bei einem Telefonsystem kann es erforderlich sein, ein schnurloses Telefon an einer Basisstation anzumelden und damit zu registrieren. Dies ist beispielsweise in sogenannten Konzentratorsystemen der Fall, bei denen mehrere Mobilteile parallel (ohne die Möglichkeit von Internverbindungen) an einer Basisstation betrieben werden können. Zum Aufbau eines solchen Systems müssen mehrere Mobilteile der Basisstation zugeordnet werden, und zur späteren Erweiterung ist es wünschenswert, auch neue Mobilteile an der Basisstation anmelden zu können.

Auch bei Telefonsystemen, die nur aus einer einzigen Basisstation und einem einzigen Mobilteil bestehen, ist die Möglichkeit der flexiblen Anmeldung wünschenswert. Dadurch wird die Herstellung des Telefonsystems erleichtert, weil keine Rücksicht auf eine paarweise Zuordnung von Mobilteil und Basisstation genommen werden muß. Ferner kann ein verlorenes oder defektes Mobilteil in diesem Fall einfach durch ein neues ersetzt werden.

Aus der US 5 500 888 ist ein Schnurlostelefon bekannt, das eine Einrichtung zur Erhöhung der Sicherheit des Schnurlostelefons gegen unberechtigte Benutzung des Telefons und gegen unberechtigtes Mithören aufweist. Diese Einrichtung ist dazu derart ausgebildet, dass bei Erstinbetriebnahme des Telefons in dem Mobilteil und der Basisstation ein Sicherheitscode gespeichert wird und dass dieser gespeicherte Sicherheitscode automatisch, jedesmal, wenn sich das Mobilteil zum Laden der Batterie auf der Basisstation befindet, geändert wird. Diese Änderung des Codes erfolgt dadurch, dass ein neuer Code aus einer Zufallszahl in dem Mobilteil oder der Basisstation generiert wird, dieser neue Code über die Funkschnittstelle des Telefons der jeweils anderen Seite übertragen wird und die Übertragung des Codes dem Codesender vom Codeempfänger über die Funkschnittstelle bestätigt wird.

Aus der US 4 736 404 ist ein Schnurlostelefon bekannt, das eine Einrichtung zur Erhöhung der Sicherheit des Schnurlostelefons gegen unberechtigte Benutzung des Telefons aufweist. Diese Einrichtung ist dazu derart ausgebildet, dass bevor mit dem Mobilteil des Telefons über die Basisstation telefoniert werden kann, ein Sicherheitscode verglichen wird. Ergibt der vergleich, dass der Code übereinstimmt, so kann mit dem Mobilteil telefoniert werden, anderenfalls wird das Mobilteil als unberechtigt abgewiesen. Zur Vorbereitung des Codevergleichs werden, wenn sich das Mobilteil zum Laden der Batterie erstmals auf der Basisstation befindet, über die Ladekontakte und der Ladeleitung von der Basisstation ein vorgegebener, in der Basisstation gespeicherter Signalcode dem Mobilteil mitgeteilt und der Empfang des Signalcodes von dem Mobilteil der Basisstation bestätigt.

Bei bekannten Telefonsystemen nach dem CT0-Standard ist zwar das Anmelden eines Mobilteils an einer Basisstation grundsätzlich möglich; es müssen dazu jedoch aufwendige Authentifizierungsroutinen durchlaufen werden. Der Grund dafür ist, daß dieser Standard anfällig für Fremdnutzung ist und ausgeschlossen werden soll, daß sich beispielsweise ein Nachbar an der Basisstation eines Benutzers anmeldet und dann auf dessen Kosten telefoniert. Die Authentifizierungsroutine erfordert daher zumindest die Eingabe eines PIN-Codes. Der gesamte Vorgang ist umständlich und fehleranfällig. Insbesondere bei einfacheren Geräten ohne Display ist die Eingabe einer Reihe von Zahlencodes aus einer gedruckten Bedienungsanleitung erforderlich, was beispielsweise für unerfahrene Benutzer abschreckend wirkt.

Es ist daher Aufgabe der Erfindung, die genannten Probleme zu lösen und eine einfache und gleichzeitig sichere Möglichkeit zum Anmelden eines Mobilteils an einer Basisstation bereitzustellen, die einen möglichst geringen Hard- und Softwareaufwand erfordert.

Erfindungsgemäß wird diese Aufgabe durch ein Verfahren mit den Merkmalen des Anspruchs 1 sowie durch ein Kommunikationssystem mit den Merkmalen des Anspruchs 11 gelöst.

Die Erfindung beruht auf der Grundidee, den für die Anmeldung erforderlichen Identifikator über die gewöhnliche Funkverbindung zwischen dem Mobilteil und der Basisstation zu übertragen und zusätzlich eine Bestätigung vorzusehen, die über eine lokale Verbindung zwischen dem Mobilteil und der Basisstation übertragen wird. Unter einer lokalen Verbindung soll hierbei jede Verbindung verstanden werden, die eine räumliche Nähe zwischen dem Mobilteil und der Basisstation sicherstellt.

Durch den Einsatz einer lokalen Verbindung ist das erfindungsgemäße Verfahren sicher, denn ein Mobilteil kann nur dann angemeldet werden, wenn es sich räumlich hinreichend nahe an der Basisstation befindet. Ein Nachbar oder eine andere unberechtigte Person, die keinen Zugang zu den Räumen hat, in denen sich die Basisstation befindet, kann kein Mobilteil anmelden. Da der Identifikator über die bereits vorhandene Funkverbindung zwischen dem Mobilteil und der Basisstation übermittelt wird, ist hierfür kein oder nur geringer zusätzlicher Aufwand erforderlich. Die zusätzliche lokale Verbindung bedingt ebenfalls nur einen geringen Aufwand, weil über sie nur sehr wenige Informationen übertragen werden müssen und daher schon einfachste Ausgestaltungen ausreichen.

In bevorzugten Ausführungsformen ist die lokale Verbindung eine elektrische oder magnetische oder induktive oder optische Verbindung. Insbesondere kann die lokale Verbindung einen unmittelbaren oder nahezu unmittelbaren Kontakt zwischen der Basisstation und dem Mobilteil sicherstellen. Zum Beispiel kann vorgesehen sein, die lokale Verbindung über bereits vorhandene Ladekontakte zwischen dem Mobilteil und der Basisstation herzustellen. Die in diesem Fall erforderliche Schaltung zum Erzeugen beziehungsweise Erkennen eines Bestätigungssignals ist nicht aufwendig.

Die lokale Verbindung kann besonders einfach aufgebaut sein, wenn über sie nur ein binäres Signal übertragen wird. Bevorzugt wird bei jedem Anmeldevorgang nur eine Informationsmenge von einem Bit über die lokale Verbindung übertragen. Dies reicht zur zuverlässigen Zuordnung von Basisstation und Mobilteil aus.

Bevorzugt wird bei jedem Auflegen des Mobilteils auf die Basisstation überprüft, ob eine Anmeldung vorgenommen werden soll. Eine Neuanmeldung ist insbesondere dann nicht erforderlich, wenn das Mobilteil bereits an dieser oder einer anderen Basisstation angemeldet ist.

Der Identifikator dient insbesondere zur Zuordnung des Mobilteils zur Basisstation. In bevorzugten Ausführungsformen wird der Identifikator als eine Zufallszahl vom Mobilteil oder der Basisstation bestimmt. Vorzugsweise wird der Identifikator und/oder die Bestätigung von dem Mobilteil generiert und von dort zur Basisstation übertragen. Die Basisstation empfängt in bevorzugten Ausführungsformen den Identifikator und fordert die Bestätigung vom Mobilteil an. Eine Anmeldung ist bevorzugt dann erfolgreich, wenn das Bestätigungssignal in einem vorbestimmten Zeitfenster nach dieser Anforderung generiert wird. In weiteren Schritten können dann weitere Daten, beispielsweise Anmeldedaten, über die Funkverbindung übermittelt werden.

Das Kommunikationssystem weist in bevorzugten Ausführungsformen die oben angeführten Merkmale auf.

Ein von den Erfindern gegenwärtig bevorzugtes Ausführungsbeispiel der Erfindung sowie mehrere Ausführungsalternativen werden nun anhand der schematischen Zeichnungen genauer beschrieben. Es stellen dar:
FIG 1 ein Blockschaltbild von für die Erfindung relevanten Komponenten eines Kommunikationssystems, und
FIG 2 ein Ablaufdiagramm eines Anmeldeverfahrens.

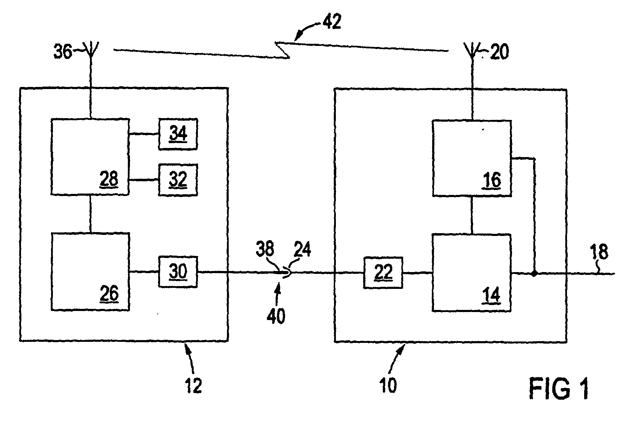

Das in FIG 1 dargestellte Kommunikationssystem ist ein analoges Telefonsystem nach dem CT0-Standard mit einer Basisstation 10 und einem als schnurloses Telefon ausgebildeten Mobilteil 12. Die Basisstation 10 weist eine Steuereinrichtung 14 und eine Analogbaugruppe 16 auf, die miteinander sowie mit einer Amtsleitung 18 verbunden sind. Eine Antenne 20 ist zum Senden und Empfangen von Hochfrequenzsignalen an die Analogbaugruppe 16 angeschlossen. Die Steuereinrichtung 14 ist über eine Bestätigungsempfangseinrichtung 22 mit einem als zweipoliger Kontakt ausgebildeten Ladekontakt 24 verbunden.

Das Mobilteil 12 weist seinerseits eine Steuereinrichtung 26 auf, die mit einer Analogbaugruppe 28 sowie einer Bestätigungssendeeinrichtung 30 verbunden ist. An die Analogbaugruppe 28 sind ein Lautsprecher 32, ein Mikrofon 34 und eine Antenne 36 angeschlossen. Die Bestätigungssendeeinrichtung 30 steht mit einem zweipoligen Ladekontakt 38 in Verbindung.

Das Telefonsystem enthält weitere Baugruppen, beispielsweise Bedienungselemente, Anzeigeeinrichtungen oder Stromversorgungseinrichtungen. Diese Baugruppen sind gut bekannt und in der schematischen Darstellung von FIG 1 nicht gezeigt.

In FIG 1 ist das Mobilteil 12 auf die als Ladeeinrichtung ausgestaltete Basisstation 10 aufgelegt, so daß die beiden je zweipoligen Ladekontakte 24 und 38 miteinander verbunden sind. Ein Akkumulator des Mobilteils 12 (in FIG 1 nicht dargestellt) wird über diese Kontakte 24 und 38 geladen. Bei aufgelegtem Mobilteil 12 besteht ferner eine lokale Verbindung 40 zwischen den beiden Steuereinrichtungen 26 und 14. Die lokale Verbindung 40, die hier eine elektrische Leitungsverbindung ist, verläuft von der Steuereinrichtung 26 über die Bestätigungssendeeinrichtung 30, die beiden Ladekontakte 38 und 24 und die Bestätigungsempfangseinrichtung 22 zur Steuereinrichtung 14. Über die lokale Verbindung 40 kann ein Bestätigungssignal vom Mobilteil 12 zur Basisstation 10 übermittelt werden, wie dies später noch genauer beschrieben wird.

Ein auf der Amtsleitung 18 eingehender Anruf wird von der Steuereinrichtung 14 erkannt und dem Mobilteil 12 über eine Funkverbindung 42 signalisiert, die über die Analogbaugruppe 16, die Antenne 20, die Antenne 36 und die Analogbaugruppe 28 verläuft. Dabei sendet die Basisstation 10 einen das Mobilteil 12 kennzeichnenden Identifikator über die Funkverbindung 42. Auf entsprechende Weise wird eine vom Mobilteil 12 ausgehende Verbindungsanforderung der Basisstation 10 über die Funkverbindung 42 übermittelt. Während eines Telefonats dient die Funkverbindung 42 ferner als Duplexverbindung zum Übertragen des Gesprächs zwischen dem Lautsprecher 32 beziehungsweise dem Mikrofon 34 und der Amtsleitung 18.

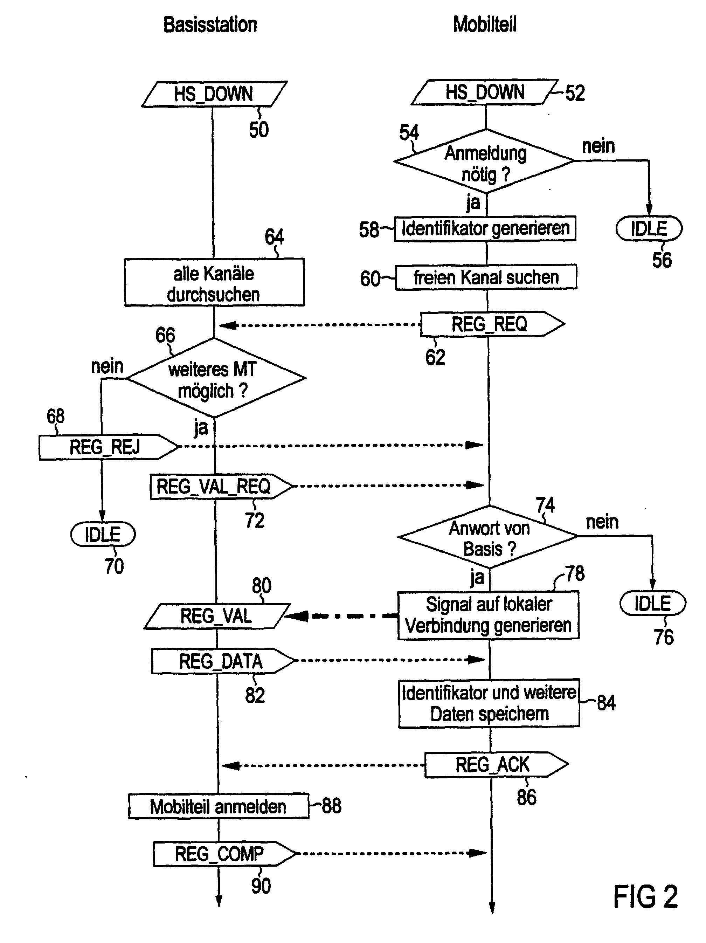

Wenn das Mobilteil 12 auf die Basisstation 10 aufgelegt wird, beginnt der in FIG 2 dargestellte Ablauf. Das Diagramm von FIG 2 beruht auf einer der Beschreibungssprache SDL ähnlichen Notation. In der linken Spalte ist der Ablauf in der Basisstation 10 und in der rechten Spalte der Ablauf im Mobilteil 12 gezeigt. Die dünnen, gestrichelten Pfeile zwischen den Ablaufsträngen stellen Kommunikationsvorgänge über die Funkverbindung 42 dar, während der dickere, strichpunktierte Pfeil das Übermitteln eines Bestätigungssignals über die lokale Verbindung 40 kennzeichnet.

Beide Ablaufstränge in FIG 2 beginnen mit dem Ereignis HS_DOWN (Ereignisse 50 beziehungsweise 52). Dieses das Auflegen des Mobilteils 12 anzeigende Ereignis wird in der Basisstation 10 und im Mobilteil 12 von je einer geeigneten Schaltung erkannt, die den über die Ladekontakte 24 und 38 fließenden Akkuladestrom mißt.

Die Steuereinrichtung 26 im Mobilteil 12 überprüft nun, ob eine Anmeldung des Mobilteils 12 erforderlich ist. Ein bereits an dieser Basisstation 10 oder an einer anderen Basisstation angemeldetes Mobilteil 12 muß nicht mehr erneut angemeldet werden. In der Abfrage 54 stellt daher das Mobilteil 12 fest, ob in ihm bereits ein Identifikator zur Zuordnung zu einer Basisstation 10 gespeichert ist. Wenn dies der Fall ist, ist eine Anmeldung nicht erforderlich, und das Mobilteil 12 geht in einen Ruhezustand IDLE (Zustand 56) über, in dem es lediglich von der Basisstation 10 mit einer Ladespannung versorgt wird.

Ist dagegen im Mobilteil 12 kein Identifikator gespeichert, so ist eine Anmeldung erforderlich. Dieser Fall tritt bei dem ersten Auflegen eines neuen Mobilteils 12 auf eine Basisstation 10 auf. Auch kann der Identifikator eines Mobilteils 12 mittels einer geeigneten Kommandosequenz gelöscht werden, wenn beispielsweise das Mobilteil 12 auf eine andere Basisstation 10 umgemeldet werden soll. Auch in diesem Fall wird die Anmeldeprozedur durchlaufen.

Als erster Schritt des eigentlichen Anmeldeverfahrens generiert die Steuereinrichtung 26 des Mobilteils 12 einen neuen Identifikator als eine 16 Bit breite Zufallszahl (Schritt 58). Dazu ist in der Steuereinrichtung 26 ein 16 Bit breiter Binärzähler vorgesehen, der während des Betriebs des Mobilteils 12 mit einer vorbestimmten Zählrate hochgezählt wird. Dieser Zähler wird beim Erkennen des Ereignisses 52 (HS_DOWN) angehalten, und der erreichte Zählerstand dient als vorläufiger Identifikator, der in der folgenden Anmeldeprozedur noch zur Basisstation 10 übertragen und bestätigt werden muß.

Das Mobilteil 12 sucht nun in Schritt 60 einen freien Funkkanal und überträgt während einer vorbestimmten Zeit laufend einen Datenrahmen REG_REQ über die Funkverbindung 42 (Sendeereignis 62). Der Datenrahmen REG_REQ enthält den in Schritt 58 ermittelten vorläufigen Identifikator. Währenddessen durchsucht die Basisstation 10 in Schritt 64 alle zur Verfügung stehenden Kanäle (beispielsweise 10 oder 25 Kanäle) nach einem eingehenden Datenrahmen REG_REQ. Dieser Kanaldurchlauf (scanning) wird durch das Ereignis 50 (HS_DOWN) in der Basisstation 10 ausgelöst.

Die Basisstation 10 führt nur eine vorbestimmte Anzahl von vollständigen Kanaldurchläufen aus, beispielsweise zwei. Wenn während dieser Kanaldurchläufe kein Datenrahmen REG_REQ empfangen wird, nimmt die Basisstation 10 an, daß eine Anmeldung nicht erforderlich ist und sich das Mobilteil 12 im Ruhezustand 56 befindet. Die Basisstation 10 bricht dann die Suche ab und geht auch ihrerseits in einen Ruhezustand über.

Hat die Basisstation 10 dagegen den Datenrahmen REG_REQ während der Suche in Schritt 64 empfangen, so überprüft sie in Abfrage 66, ob ein weiteres Mobilteil 12 angemeldet werden kann. Jede Basisstation 10 kann nur eine vorbestimmte Höchstzahl von Mobilteilen 12 bedienen, beispielsweise vier. Wenn die Basisstation 10 bereits ausgelastet ist oder aus anderen Gründen die Anmeldung des Mobilteils 12 verweigert, sendet sie einen Datenrahmen REG_REJ (Sendeereignis 68) über die Funkverbindung 42 und geht dann in einen Ruhezustand 70 über. Am Mobilteil 12 wird als Reaktion auf den Datenrahmen REG_REJ ein Negativ-Quittungston ausgelöst. Auch das Mobilteil 12 beendet daraufhin die Anmeldeprozedur.

Ist dagegen aus Sicht der Basisstation 10 die Anmeldung des Mobilteils 12 möglich, so sendet die Basisstation 10 einen Datenrahmen REG_VAL_REQ (Sendeereignis 72) über die Funkverbindung 42. Der Datenrahmen REG_VAL_REQ enthält den vorläufigen, durch das Sendeereignis 62 übertragenen Identifikator. Dieser Datenrahmen stellt die Aufforderung für das Mobilteil 12 dar, sich mittels eines geeigneten Hardwaresignals zu identifizieren.

Wie bereits erwähnt, sendet das Mobilteil 12 fortlaufend den Datenrahmen REG_REQ (Sendeereignis 62) und wartet währenddessen auf eine Antwort von der Basisstation 10. Wenn bis zum Ablauf der vorbestimmten Wartezeit keine Antwort eingegangen ist, wird in einer Abfrage 74 ein Zeitfehler (timeout) ausgelöst und das Mobilteil 12 geht in einen Ruhezustand 76 über. Das Ausbleiben einer Antwort kann von einer Störung der Funkverbindung 42 verursacht worden sein. Ein weiterer möglicher Grund ist, daß das Mobilteil 12 nicht auf eine voll funktionale Basisstation 10, sondern lediglich auf eine Ladeschale aufgelegt wurde. Das Mobilteil 12 beginnt in diesem Fall trotzdem die Anmeldeprozedur, da das Ereignis 52 (HS_DOWN) aufgrund des Akkuladestroms erkannt wird.

Hat das Mobilteil 12 innerhalb des vorgesehenen Zeitfensters den Datenrahmen REG_VAL_REQ erhalten, so sendet es eine entsprechende Bestätigung über die lokale Verbindung 40 (Schritt 78). Diese Bestätigung ist das Zeichen dafür, daß die Anmeldung tatsächlich mit dem auf der Basisstation 10 aufliegenden Mobilteil 12 (und nicht etwa mit einem anderen Mobilteil) durchgeführt wird.

In dem hier beschriebenen Ausführungsbeispiel wird die Bestätigung als ein elektrisches Spannungssignal über die Ladekontakte 24 und 38 übertragen. Die Bestätigungssendeeinrichtung 30 stellt dazu ein geeignet moduliertes Signal bereit, das sich von der normalen Ladespannung sowie von Signalen, die bei eventuellen Fehlkontakten entstehen können, unterscheidet. Die Bestätigungsempfangseinrichtung 22 filtert derartige Störungen aus und leitet ein erkanntes Betätigungssignal an die Steuereinrichtung 14 weiter. Das Bestätigungssignal übermittelt lediglich einen Informationsgehalt von einem Bit, enthält also keinen Identifikator oder sonstige Angaben.

In Ausführungsalternativen sind andere Funktionsweisen der lokalen Verbindung 40 möglich. Beispielsweise können statt der Ladekontakte 24 und 38, über die auch der Ladestrom für das Mobilteil 12 fließt, andere elektrische Kontakte zwischen der Basisstation 10 und dem Mobilteil 12 verwendet werden, oder es kann eine induktive, magnetische oder optische Verbindung eingesetzt werden. Um die Sicherheit weiter zu erhöhen, werden in weiteren Ausführungsalternativen komplexere Bestätigungsnachrichten verwendet.

Wenn die Bestätigung innerhalb einer vorgegebenen Zeitspanne nach dem Absenden des Datenrahmens REG_VAL_REQ bei der Basisstation 10 eingeht, wird dies als Ereignis REG_VAL (Ereignis 80) erkannt. Trifft die Bestätigung nicht oder zu spät ein, wird die Anmeldeprozedur abgebrochen.

Als Reaktion auf das Ereignis 80 (REG_VAL) sendet die Basisstation 10 über die Funkverbindung 42 einen Datenrahmen REG_DATA (Sendeereignis 82), der alle erforderliche Anmeldedaten enthält. Dies sind in dem hier beschriebenen Ausführungsbeispiel der Identifikator, eine Indexnummer des Mobilteils 12 und zwei oder mehrere Bezeichner für diejenigen Funkkanäle, auf denen die zukünftige Kommunikation zwischen der Basisstation 10 und dem Mobilteil 12 erfolgen soll. In Ausführungsalternativen können weitere oder andere Anmeldedaten übertragen werden.

Wenn das Mobilteil 12 den Datenrahmen REG_DATA erhält, speichert es in Schritt 84 die übermittelten Anmeldedaten. Der Identifikator, der vom Mobilteil 12 in Schritt 58 generiert wurde, ist bisher lediglich als vorläufiger Identifikator betrachtet worden. In Schritt 84 wird er nun als endgültiger, bestätigter Identifikator im Mobilteil 12 gespeichert. Das Mobilteil 12 bestätigt den korrekten Empfang der Anmeldedaten mit einem Datenrahmen REG_ACK, der über die Funkverbindung 42 zur Basisstation 10 gesendet wird (Sendeereignis 86). Falls dagegen die Anmeldedaten nicht innerhalb eines vorbestimmten Zeitraums beim Mobilteil 12 eintreffen, wird die Anmeldung abgebrochen. Das Mobilteil 12 gibt dann einen Negativ-Quittungston aus.

In Schritt 88 wird die Anmeldung des Mobilteils 12 in der Basisstation 10 vervollständigt. Das Mobilteil 12 wird mit dem nun bestätigten Identifikator in eine von der Steuereinrichtung 14 geführte Anmeldeliste eingetragen. Der erfolgreiche Abschluß dieses Vorgangs wird von der Basisstation 10 mit einem Datenrahmen REG_COMP quittiert (Sendeereignis 90). Der Datenrahmen REG_COMP enthält den Identifikator und wird über die Funkverbindung 42 übertragen. Das Mobilteil 12 signalisiert den Empfang dieses Datenrahmens mit einem Positiv-Quittungston, um dem Benutzer die erfolgreiche Anmeldung zu bestätigen. Falls der Datenrahmen REG_COMP dagegen nicht oder zu spät eintrifft, erzeugt das Mobilteil 12 einen Negativ-Quittungston und löscht die in Schritt 84 gespeicherten Anmeldedaten.

In Ausführungsalternativen dieses Verfahrens sind andere Ausgestaltungen und Zeitabläufe des Kommunikationsprotokolls möglich. Insbesondere können mehr oder weniger Nachrichten ausgetauscht werden, oder die Rollen der Sender und Empfänger dieser Nachrichten können durchgehend oder teilweise vertauscht sein. Ferner ist eine Anpassung des Verfahrens an andere Kommunikationssysteme als Mobiltelefone möglich.

## Patentansprüche

1. Verfahren zum Anmelden eines Mobilteils (12) an einer Basisstation (10), insbesondere in einem Telefonsystem, mit den schritten:
a) Erkennen (50, 52, 54) einer Anmeldesituation, indem das Mobilteil (12) oder die Basisstation (10) feststellt, daß das Mobilteil (12) an der Basisstation (10) noch nicht angemeldet ist,
b) Erzeugen (58) eines Identifikators,
c) Ubertragen (62) des Identifikators über eine Funkverbindung (42) zwischen dem Mobilteil (12) und der Basisstation (10),
d) Ubertragen (72) einer Aufforderung zur Identifizierung mittels eines Bestätigungssignales über die Funkverbindung (42) zwischen dem Mobilteil (12) and der Basisstation (10) und
e) Übertragen (78) des Bestätigungssignales über eine lokale Verbindung (40) zwischen dem Mobilteil (12) und der Basisstation (10).

2. Verfahren nach Anspruch 1,
**dadurch gekennzeichnet, daß** die lokale Verbindung (40) eine elektrische oder magnetische oder induktive oder optische Verbindung ist.

3. Verfahren nach Anspruch 1,
**dadurch gekennzeichnet, daß** die lokale Verbindung (40) eine elektrische Verbindung ist, die über Ladekontakte (24, 38) zwischen dem Mobilteil (12) und der Basisstation (10) hergestellt wird.

4. Verfahren nach einem der Ansprüche 1 bis 3,
**dadurch gekennzeichnet, daß** über die lokale Verbindung (40) ein binäres Signal übertragen wird.

5. Verfahren nach einem der Ansprüche 1 bis 4,
**dadurch gekennzeichnet, daß** in Schritt a) das Erkennen (50, 52, 54) der Anmeldesituation durch ein Auflegen des Mobilteils (12) auf die Basisstation (10) angestoßen wird.

6. Verfahren nach einem der Ansprüche 1 bis 5,
**dadurch gekennzeichnet, daß** in Schritt b) der Identifikator als eine Zufallszahl erzeugt wird.

7. Verfahren nach einem der Ansprüche 1 bis 6,
**dadurch gekennzeichnet, daß** in Schritt b) der Identifikator von dem Mobilteil (12) erzeugt und in Schritt c) zur Basisstation (10) übertragen wird.

8. Verfahren nach einem der Ansprüche 1 bis 7,
**dadurch gekennzeichnet, daß** in Schritt e) das Bestätigungssignal vom Mobilteil (12) erzeugt und zur Basisstation (10) übertragen wird.

9. Verfahren nach einem der Ansprüche 1 bis 8,
**dadurch gekennzeichnet, daß** in Schritt e) das Bestätigungssignal in Reaktion auf eine über die Funkverbindung (42) übertragene Anforderung (REG_VAL_REQ) innerhalb eines vorbestimmten Zeitintervalls übertragen wird.

10. Verfahren nach einem der Anspruche 1 bis 9, **gekennzeichnet durch** den weiteren Schritt:
e) Ubertragen (82) von Anmeldedaten über die Funkverbindung (42).

11. Kommunikationssystem, insbesondere Telefonsystem, mit mindestens einem Mobilteil (12) und mindestens einer Basisstation (10) mit folgenden Merkmalen:
a) Mittel (14, 24, 26, 38) zum Erkennen (50, 52, 54) einer Anmeldesituation,
b) Mittel (14, 26) zum Erzeugen (58) eines Identifikators,
c) erste Mittel (14, 16, 20, 26, 28, 36) zum Übertragen (62) des Identifikators über eine Funkverbindung (42) zwischen dem Mobilteil (12) und der Basisstation (10), und
d) die ersten Mittel (14, 16, 20, 26, 28, 36) zum Ubertragen (72) einer Aufforderung zur Identifizierung mittels eines Bestätigungssignales über die Funkverbindung (42) zwischen dem Mobilteil (12) und der Basisstation (10),
e) zweite Mittel (14, 22, 26, 30) zum Übertragen (78) des Bestätigungssignales über eine lokale Verbindung (90) zwischen dem Mobilteil (12) und der Basisstation (10).

## Claims

1. Method for registering a mobile part (12) with a base station (10), in particular in a telephone system, comprising the following steps:
a) identification (50, 52, 54) of a registration situation in that the mobile part (12) or the base station (10) finds that the mobile part (12) is not yet registered with that base station (10),
b) production (58) of an identifier,
c) transmission (62) of the identifier via a radio link (42) between the mobile part (12) and the base station (10),
d) transmission (72) of a request for identification by means of a confirmation signal via the radio link (42) between the mobile part (12) and the base station (10), and
e) transmission (78) of the confirmation signal via a local link (40) between the mobile part (12) and the base station (10).

2. Method according to Claim 1,
**characterized in that** the local link (40) is an electrical, magnetic, inductive or optical link.

3. Method according to Claim 1,
**characterized in that** the local link (40) is an electrical link, which is produced via charging contacts (24, 38) between the mobile part (12) and the base station (10).

4. Method according to one of Claims 1 to 3,
**characterized in that** a binary signal is transmitted via the local link (40).

5. Method according to one of Claims 1 to 4,
**characterized in that**, in step a), the identification (50, 52, 54) of the registration situation is initiated by placing the mobile part (12) on the base station (10).

6. Method according to one of Claims 1 to 5,
**characterized in that**, in step b), the identifier is produced as a random number.

7. Method according to one of Claims 1 to 6,
**characterized in that**, in step b), the identifier is produced by the mobile part (12) and, in step c), is transmitted to the base station (10).

8. Method according to one of Claims 1 to 7,
**characterized in that**, in step e), the confirmation signal is produced by the mobile part (12) and is transmitted to the base station (10).

9. Method according to one of Claims 1 to 8,
**characterized in that**, in step e), the confirmation signal is transmitted as a reaction to a request (REG_VAL_REQ), transmitted via the radio link (42), within a predetermined time interval.

10. Method according to one of Claims 1 to 9,
**characterized by** the following further step:
e) transmission (82) of registration data via the radio link (42).

11. Communications system, in particular a telephone system, having at least one mobile part (12) and at least one base station (10), and having the following features:
a) means (14, 24, 26, 38) for identification (50, 52, 54) of a registration situation,
b) means (14, 26) for production (58) of an identifier,
c) first means (14, 16, 20, 26, 28, 36) for transmission (62) of the identifier via a radio link (42) between the mobile part (12) and the base station (10), and
d) the first means (14, 16, 20, 26, 28, 36) for transmission (72) of a request for identification by means of a confirmation signal via the radio link (42) between the mobile part (12) and the base station (10),
e) second means (14, 22, 26, 30) for transmission (78) of the confirmation signal via a local link (40) between the mobile part (12) and the base station (10).

## Revendications

1. Procédé d'entrée en communication dune unité mobile (12) avec une station de base (10), en particulier dans un système téléphonique, comprenant les étapes suivantes:
a) reconnaissance (50, 52, 54) dune situation d'entrée en communication consistant en ce que l'unité mobile (12) ou la station de base (10) constate que l'unité mobile (12) n'est pas encore entrée en communication avec la station de base (10),
b) génération (58) d'un identificateur,
c) transmission (62) de l'identificateur via une connexion hertzienne (42) entre l'unité mobile (12) et la station de base (10),
d) transmission (72) dune invitation à s'identifier au moyen d'un signal de confirmation via la connexion hertzienne (42) entre l'unité mobile (12) et la station de base (10) et
e) transmission (78) du signal de confirmation via une connexion locale (40) entre l'unité mobile (12) et la station de base (10).

2. Procédé selon la revendication 1, **caractérisé en ce que** la connexion locale (40) est une connexion électrique, magnétique, inductive ou optique.

3. Procédé selon la revendication 1, **caractérisé en ce que** la connexion locale (40) est une connexion électrique établie par l'intermédiaire de contacts de charge (24, 38) entre l'unité mobile (12) et la station de base (10).

4. Procédé selon Tune des revendications 1 à 3, **caractérisé en ce qu'**un signal binaire est transmis via la connexion locale (40).

5. Procédé selon Tune des revendications 1 à 4, **caractérisé en ce que** la reconnaissance (50, 52, 54) de la situation d'entrée en communication, à l'étape a), est initiée par le dépôt de l'unité mobile (12) sur la station de base (10).

6. Procédé selon l'une des revendications 1 à 5, **caractérisé en ce que** l'identificateur, à l'étape b), est généré sous forme de chiffre aléatoire.

7. Procédé selon Tune des revendications 1 à 6, **caractérisé en ce que** l'identificateur, à l'étape b), est généré par l'unité mobile (12) et transmis, à l'étape c), à la station de base (10).

8. Procédé selon Tune des revendications 1 à 7, **caractérisé en ce que** le signal de confirmation, à l'étape e), est généré par l'unité mobile (12) et transmis à la station de base (10).

9. Procédé selon l'une des revendications 1 à 8, **caractérisé en ce que** le signal de confirmation, à l'étape e), est transmis, dans les limites d'un intervalle de temps prédéfini, en réponse à une demande (REG_VAL_REQ) transmise via la connexion hertzienne (42).

10. Procédé selon Tune des revendications 1 à 9, **caractérisée par** l'étape supplémentaire suivante:
f) transmission (82) de données d'entrée en communication via la connexion hertzienne (42).

11. Système de communication, en particulier système téléphonique, comprenant au moins une unité mobile (12) et au moins une station de base (10) présentant les caractéristiques suivantes:
a) moyens (14, 24, 26, 38) de reconnaissance (50, 52, 54) dune situation d'entrée en communication,
b) moyens (14, 26) de génération (58) d'un identificateur,
c) des premiers moyens (14, 16, 20, 26, 28, 36) de transmission (62) de l'identificateur via une connexion hertzienne (42) entre l'unité mobile (12) et la station de base (10) et
d) les premiers moyens (14, 16, 20, 26, 28, 36) de transmission (72) d'une invitation à s'identifier au moyen d'un signal de confirmation via la connexion hertzienne (42) entre l'unité mobile (12) et la station de base (10),
e) des seconds moyens (14, 22, 26, 30) de transmission (78) du signal de confirmation via une connexion locale (40) entre l'unité mobile (12) et la station de base (10).
